# EUROPEAN PATENT SPECIFICATION

(11) **EP 2 769 307 B1**
(45) Date of publication and mention of the grant of the patent: **10.06.2020**
(21) Application number: 12841819.1
(22) Date of filing: 19.10.2012
(51) Int. Cl.: G06F 15/16, H04L 29/12

(54) **ANSWER AUGMENTATION SYSTEM FOR AUTHORITATIVE DNS SERVERS**
ANTWORTERWEITERUNGSSYSTEM FÜR AUTORITATIVE DNS-SERVER
SYSTÈME D'AUGMENTATION DE RÉPONSE POUR SERVEURS DNS D'AUTORITÉ

(30) Priority: 19.10.2011 US 201161548803 P
(43) Date of publication of application: 27.08.2014
(73) Proprietor: Akamai Technologies, Inc., Cambridge, MA 02142 (US)
(72) Inventor: FLEISCHMAN, Robert M., Concord, New Hampshire 03301 (US); WATERS, William Thomas, Clifton Park, New York 12065 (US); WYATT, Robert A., Windham, New Hampshire 03087 (US)
(74) Representative: Avidity IP
(86) International application number: PCT/US2012/060939
(87) International publication number: WO 2013/059541

(56) References cited:
- WO-A1-2011/123812
- US-A1- 2005 204 039
- US-A1- 2006 031 385
- US-A1- 2006 106 788
- US-A1- 2008 034 118
- US-A1- 2010 174 829
- US-B1- 6 829 653
- Tom Daly: "Surf Without the Sharks: NXDomain Redirection Opt-Out | Dyn Blog", , 7 October 2010 (2010-10-07), pages 1-5, XP055267866, Retrieved from the Internet: URL:http://dyn.com/blog/nx-domain-redirect ion-opt-out/ [retrieved on 2016-04-22]

## Description

### PRIORITY AND RELATED APPLICATIONS

The present Application for Patent claims priority to Provisional Application No. 61/548,803 entitled "ANSWER AUGMENTATION SYSTEM FOR AUTHORITATIVE DNS SERVERS" filed October 19, 2011, and assigned to the assignee hereof.

### FIELD OF THE DISCLOSURE

The present disclosure relates generally to name servers. In particular, but not by way of limitation, the present disclosure relates to systems, methods and apparatuses for forward and reverse DNS translation for IPv6 addresses.

### BACKGROUND

Reverse DNS lookup is a process of identifying a domain name associated with an IP address using the domain name service (DNS) of the Internet. Typically, a web server, such as that hosting the www.newyorktimes.com website, may be accessed by a client, where the web server can see that the client has a certain IP address, but is unable to identify a domain name associated with the IP address, and therefore does not know the identity or owner of the client machine. The web server can perform a DNS query asking what the domain name is that corresponds to the IP address of the client. A name server (e.g., DNS server) may provide an answer, or if an answer is not available to the queried name server, the name server can pass the query to an authoritative DNS server, which may have the answer or know a name server likely to have the answer. An authoritative name server typically contains zone files, where each zone file contains resource records mapping IP addresses to domain names, and vice versa, for a given domain (e.g., all hosts in the domain "bear-on-the-wall.org"). In this way, the web server is able to track down a domain name and hence an identity of the client that is accessing the web server. Such reverse DNS translation may be performed for security reasons or more often in order to enhance marketing and tracking of website visitors. Authoritative name servers look to pointer DNS record types (a PTR record or mapping) to perform reverse DNS lookup (e.g., 2001::1234 to host.example.com).

Forward DNS lookup is a process of identifying an IP address associated with a domain name using the DNS of the Internet. This typically occurs when a user enters a URL or clicks on a link having a URL, and the local device does not have a mapping to an IP address associated with the URL. The local device then queries a name server for the IP address associated with the URL. In another example, an Internet service provider (ISP), such as COMCAST, may wish to ping a server hosting a webpage having a domain name www.homeserver.com. In order to ping the server, COMCAST performs a forward DNS lookup for the IP address of this domain name, and once the IP address is returned, COMCAST can ping the server via the returned IP address. Authoritative name servers look to AAAA records (or mappings) to perform forward DNS lookup (e.g., host.example.com to 2001::1234).

In the world of IPv4 addresses, reverse and forward DNS lookup is a straightforward process since a single IP address is typically assigned to each device on the Internet, and service providers (e.g., COMCAST) typically associate the IP addresses that are assigned with an entry in the zone file. These tables make it a straightforward process to perform reverse or forward DNS lookup. However, with the advent of IPv6, service providers are now assigning very large numbers (e.g., 10⁶⁴) of IP addresses to households, cell towers, commercial establishments, and other device locations. Because the lookup tables required to track these huge numbers of IP addresses are typically intractable, service providers typically do not associate IP addresses with domain names.

Making this challenge even greater is that when a service provider assigns an IPv6 IP address to a device, the protocol uses data about or from the device (e.g., the device serial number or a last name of the owner) to generate the IP address. Thus, the IP addresses are not known until they are assigned. This makes it even harder to map IP addresses to domain names and vice versa as is done with IPv4 addresses.

Some service providers faced with these challenges have decided that reverse DNS lookup is too costly and challenging of a problem to tackle, and especially since it typically benefits third parties rather than a service provider's customers. For instance, if LANDS END may desire to perform reverse DNS lookups on clients accessing www.landsend.com in order to improve their marketing strategies, yet unless they are a COMCAST customer, there is no benefit to COMCAST for enabling reverse DNS lookup.

None the less, the huge numbers of IP addresses that are being parceled out without being tracked by service providers creates the potential for major security risks since these service providers are unable to identify users of the IP addresses that they are parceling out.

Furthermore, only about 5% of networked devices are using IPv6 addresses, yet this number is on the rise, especially amongst cell phone companies and emerging markets, where companies seek millions of new IP addresses and cannot afford to buy expensive IPv4 addresses.

US2008/034118 is a prime example of a prior art directed to a pseudo hostname and pseudo IP address generation system to maintain privacy of a user. US2008/034118 does not address the problem of storing large numbers of DNS records yet still providing identifying information in DNS responses.

US2010/174829 is directed to an apparatus to provide content to a reverse DNS server. US2010/174829 does not address the problem of storing large numbers of DNS records yet still providing identifying information in DNS responses.

WO2011/123812 is directed to a reverse DNS lookup with modified reverse mappings. WO2011/123812 does not address the problem of storing large numbers of DNS records yet still providing identifying information in DNS responses.

### SUMMARY OF THE DISCLOSURE

Exemplary embodiments of the present invention that are shown in the drawings are summarized below. These and other embodiments are more fully described in the Detailed Description section. It is to be understood, however, that there is no intention to limit the invention to the forms described in this Summary of the Invention or in the Detailed Description. The invention is defined by the independent claims. Further detailed embodiments of the invention are defined in the dependent claims.

### BRIEF DESCRIPTION OF THE DRAWINGS

Various objects and advantages and a more complete understanding of the present invention are apparent and more readily appreciated by referring to the following detailed description and to the appended claims when taken in conjunction with the accompanying drawings:
FIG. 1 illustrates one embodiment of a system including a client or DNS server, and answer augmentation system, and an authoritative DNS server;
FIG. 2 illustrates one embodiment of a system including a client or DNS server and a DNS answer augmentation system communicating with an authoritative DNS server via a network interface of the authoritative DNS server;
FIG. 3 illustrates one embodiment of a system including a client or DNS server and an authoritative DNS server including a DNS answer augmentation system;
FIG. 4 illustrates a method for dynamically-generating an answer to a DNS query when an authoritative DNS server does not have an answer to the DNS query; and
FIG. 5 illustrates a diagrammatic representation of one embodiment of a machine in the exemplary form of a computer system within which a set of instructions can execute for causing a device to perform or execute any one or more aspects and or methodologies of the present disclosure.

### DETAILED DESCRIPTION

The present disclosure relates generally to forward and reverse DNS lookup. More specifically, but without limitation, the present disclosure relates to providing answers to a DNS query when an authoritative DNS server does not have an answer to the request.

The word "exemplary" is used herein to mean "serving as an example, instance, or illustration." Any embodiment described herein as "exemplary" is not necessarily to be construed as preferred or advantageous over other embodiments.

Aspects of the invention are useful in augmenting the set of responses that an authoritative DNS server can provide, especially where the set of mappings required for IPv6 addresses exceeds what can reasonably be generated and stored in zone files of an authoritative DNS server. More specifically, the invention can be used to "fill in the gaps" found in an authoritative DNS server's answer set with algorithmically generated (or dynamically-generated) answers. In other words, where an answer does not exist, a dynamically-generated answer is returned. Such dynamic generation of domain names and IP addresses in response to DNS queries does not modify zone files and therefore avoids the need to store millions if not trillions of IPv6 mappings. In one embodiment, the system sits logically between clients or DNS servers that send DNS queries, which each include a "question," and the authoritative DNS servers which provide responses, which each include an "answer".

A DNS server is one example of a name server, and an authoritative DNS server is one type of authoritative name server. A DNS query and a DNS answer are just examples of queries and answers that can be made to and received from a name server or an authoritative name server. This detailed description refers to DNS servers, authoritative DNS servers, DNS queries, and DNS answers. However, these embodiments are equally applicable to other name servers and authoritative name servers as well as other types of queries and answers.

Aspects of the invention enable Internet providers to programmatically augment the responses from their authoritative DNS servers. With the adoption of IPv6's massive address space, providing forward and reverse names for every address in a provider's network can require an authoritative DNS server to have access to data sets (e.g., in zone files) that can be prohibitively large. The invention described herein enables programmatic (and dynamic) generation and substitution of an answer when the authoritative DNS server does not have the appropriate answer.

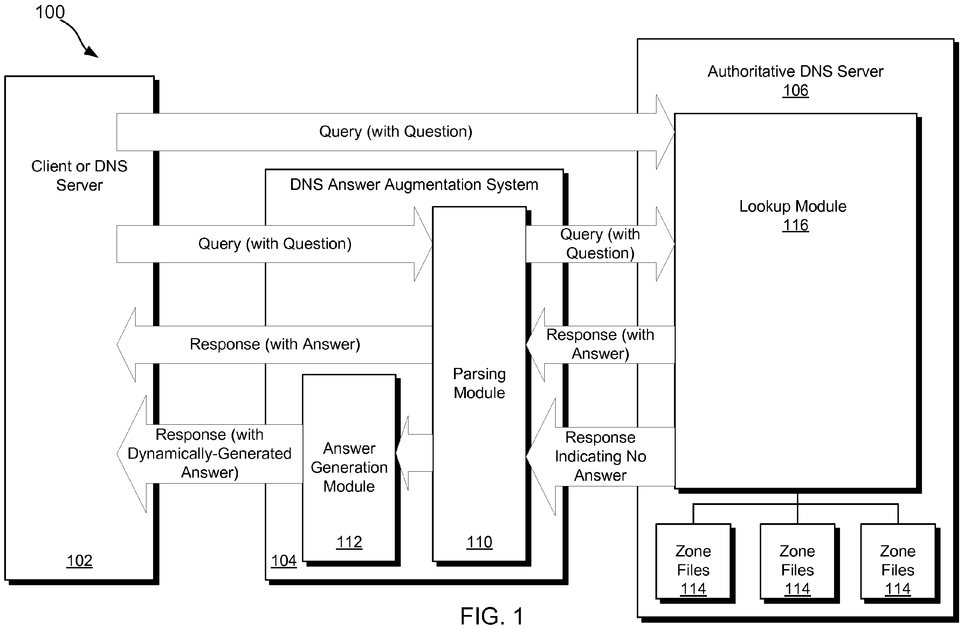

This disclosure describes, among other embodiments, apparatus and methods for using a server-based system for augmenting answers from authoritative DNS servers. In one embodiment, and with reference to FIG. 1, a system 100 constructed in accordance with aspects of the present invention consists of a DNS answer augmentation system 104 that can augment answers from an authoritative DNS server 106 in response to DNS queries from a client or DNS server 102. In some embodiments, the DNS answer augmentation system 104 can augment an answer from the authoritative DNS server 106 when the authoritative DNS server 106 cannot provide an answer, while in other cases other criteria can trigger dynamic generation of an answer regardless as to whether the authoritative DNS server 106 has the answer or not.

In particular, the DNS answer augmentation system 104 can include a parsing module 110 and an answer generation module 112. The DNS answer augmentation system 104 can receive one or more DNS queries, each having a question, from one or more clients or servers 102. The DNS answer augmentation system 104 can then determine whether it should take action relative to the DNS query. If the DNS answer augmentation system 104 is to handle the DNS query, then the parsing module 110 can parse the DNS query and pass elements of the DNS query (e.g., the question or other information from or about the DNS query) to the answer generation module 112. In another embodiment, the parsing module 110 can pass the entire DNS query to the answer generation module 112. In other embodiments, the parsing module 110 does not parse the DNS query, and instead, a response returned from the authoritative DNS server 106 will be parsed, as discussed later. In another embodiment, the DNS query can pass to the authoritative DNS server 106 without being intercepted by the DNS answer augmentation system 104.

The DNS queries can be either forward (AAAA) or reverse (PTR) DNS lookup requests and can therefore include either a domain name or an IP address, respectively. For instance, the parsing module 110 can extract at least a part of an IP address from a reverse DNS lookup request or at least a part of a domain name from a forward DNS lookup request. More particularly, given a DNS query for the PTR record associated with an address, b.a.9.8.7.6.5.O.O.O.O.O.O.O.O.O.O.O.O.O.O.O.O.O.8.b.d.O.1.O.O.2.ip6.arpa, the parsing module 110 can extract the elements "2001" "dba8" "56789" and "ab". This is just one of many ways that the parsing module 110 can parse an IP address. As another example, given a domain name, www.customer-home.example.com, the parsing module 110 could extract the elements "customer" and "home". This is just one of many ways that the parsing module 110 can parse a domain name.

Whether the DNS answer augmentation system 104 is to handle the DNS query or not, the DNS query can be passed to the authoritative DNS server 106. The authoritative DNS server 106 can determine if it has an answer to the DNS query, for instance by searching a zone file 114 associated with the DNS query. If an answer exists, then the authoritative DNS server 106 returns the answer, which is intercepted as part of a DNS packet at the DNS answer augmentation system and parsed by the parsing module 110. The parsing module 110 can determine that there is an answer and pass the answer back to the client or DNS server 102. On the other hand, the authoritative DNS server 106 may determine that it does not have an answer to the DNS query, and therefore returns an indicator that the authoritative DNS server 106 does not have an answer (also referred to as a "no answer indication'). For instance, as a response from the authoritative DNS server includes an "answer" field, the answer field can be left blank, and thus a blank answer field can be a no answer indication.

The no answer indication is intercepted by the DNS answer augmentation system 104, and in particular, the parsing module 110. From the no answer indication, the parsing module 110 determines that the authoritative DNS server 106 does not have an answer to the DNS query and therefore passes data (e.g., a request or instructions) triggering the answer generation module 112 to generate a dynamically generated answer to the question. The answer generation module 112 uses one or more algorithms to generate a dynamically-generated answer to the DNS query based on the DNS query, elements of the DNS query, or information extracted from the DNS query. The answer generation module 112 then passes the dynamicallygenerated answer back to the client or DNS server 102. The system 100 therefore enables millions, billions, or trillions of IP addresses to be assigned to customers, without the need to create mappings for each IP address, and thus avoids excessivelylarge zone files 114.

In some embodiments, the DNS query may not be parsed, but rather only the response is parsed when intercepted by the DNS answer augmentation system 104. This means that the answer generation module 112 can generate a dynamicallygenerated answer based on the question as parsed from the DNS query or from the DNS response.

In some embodiments, the DNS answer augmentation system 104 can generate dynamically-generated answers regardless of whether the authoritative DNS server 106 has the answer. For instance, during one or more periods of a day, the DNS answer augmentation system 104 may generate dynamically-generated answers for all DNS queries associated with certain IP addresses or domains or for all DNS queries. In accordance with the particular embodiment of aspects of the present invention this will be useful where an Internet service provider (ISP) desires to decrease a load on the authoritative DNS server during certain periods of the day or perhaps to allow maintenance, upgrades, or software modifications to the authoritative DNS server requiring it to be taken offline. This embodiment can also be implemented where testing of the DNS answer augmentation system 104 is carried out.

In another embodiment, the DNS answer augmentation system 104 can generate dynamically-generated answers whenever a DNS query is made to the authoritative DNS server 106, but no response is received from the authoritative DNS server. In one embodiment, a timer can run from the moment that a DNS query is intercepted by the DNS answer augmentation system 104, and if the timer reaches a certain value and no response has been received from the authoritative DNS server 106, then the DNS answer augmentation system 104 assumes that no response is coming and generates a dynamically-generated answer. Such instances may occur when the authoritative DNS server is down.

The DNS queries and DNS responses discussed herein are each part of DNS packets. The DNS answer augmentation system 104 can distinguish between DNS packets that are queries and those that are responses based on a field in the DNS packet indicating whether the DNS packet includes a query or a response. A DNS query includes a question along with other data (e.g., the "additional" field). A response can include a question as well as an answer, among other things (e.g., an "authoritative" field and the "additional" field).

The following is one non-limiting example of one of the many algorithms that can be used to dynamically generate answers to requests where the authoritative DNS server 106 does not have an answer. For a PTR request (reverse DNS lookup), the parsing module 110 may pass the following IP address to the answer generation module 112. b.a.9.8.7.6.5.O.O.O.O.O.O.O.O.O.O.O.O.O.O.O.O.O.8.b.d.O.1.O.O.2.ip6.arpa. Alternatively, the parsing module 110 may pass four elements of this IP address, "2001, dba8, 56789," and "ab," to the answer generation module 112 for use in constructing the dynamically-generated domain name. Different algorithms can select different elements of the above-illustrated IP address, and the elements can be selected based on different conditions and requirements. For instance, another algorithm could parse and pass "2001" and "dba8" to the answer generation module 112.

The answer generation module 112 can then generate a domain name, such as the following, to be the dynamically-generated domain name associated with the IP address in the request: www.2001-dba8-56789-ab.example.com. The domain " example.com" may be the domain, or one of the domains, that the authoritative DNS server 106 is authoritative for. The request is typically directed to an authoritative DNS server 106 that is authoritative for the request, and therefore the domain to be used in the dynamically-generated answer is typically known based on the request.

For an AAAA request (forward DNS lookup), the parsing module 110 may pass the following domain name to the answer generation module 112: www.2001dba8-56789-ab.example.com. Alternatively, the parsing module 110 may pass four elements of this domain name, "2001, dba8, 56789," and "ab," to the answer generation module 112 for use in constructing the dynamically-generated IP address (the answer). The answer generation module 112 can then generate the following dynamically-generated IP address to be associated with the domain name in the request: 2001:dba8:56789:ab00, where the "00" is appended to "ab" in order to meet the IPv6 syntax. Various other amendments could be used to meet the IPv6 syntax. Also, more or less than four elements of the IP address may be extracted and passed to the answer generation module 112. For instance, given a request for www.razors41ess.comcast.com, only a single element, "razors41ess," might be passed to the answer generation module 112.

In one embodiment, the one or more algorithms dynamically-generate an IP address based on the DNS query or response in whole or in part, but also where the dynamically-generated IP address matches one IP address from a set of IP addresses that are available for assignment (e.g., for assignment to the client 102). For instance, a first algorithm can be used to dynamically generate an IP address, and the dynamically-generated IP address can be compared to a set of available IP addresses. If the IP address matches one of the available addresses, then the dynamicallygenerated IP address can be returned to the client or server 102. However, if the IP address does not match one of the available addresses, then a second dynamicallygenerated IP address can be generated and compared to the available IP addresses. The second dynamically-generated IP address can be generated using a second algorithm.

Other algorithms can perform more indirect generation of dynamicallygenerated IP addresses. For instance, if the parsing module 110 extracts the elements "2001," "dba8, 56789," and "ab" from the query or response, the answer generation module 112 can generate the following IP address: 3112:ecb9:67890:bc00, where each letter or number in the parsed elements is incremented by one number or letter. Again, this is just a simple and non-limiting example of the many algorithms that can be used to dynamically generate an IP address from a domain name in a DNS query or response.

A zone file 114 (also known as a DNS zone file) is a text file that describes a DNS zone. A DNS zone is a subset, often a single domain, of the hierarchical domain name structure of the DNS. The zone file contains mappings between domain names and IP addresses and other resources (or vice versa), organized in the form of text representations of resource records (RR). A zone file 114 may be either a DNS master file, authoritatively describing a zone, or it may be used to list the contents of a DNS cache.

The client or DNS server 102 can include client devices, such as a homenetworking router, sending DNS queries to the authoritative DNS server 106, or DNS servers such as secondary authoritative DNS servers, caching DNS servers, and recursive DNS servers.

It should be recognized that the answer generation module 112 does not update or modify the zone files 114. This means, that there is typically no record of the dynamically-generated IP addresses (forward DNS) and dynamically-generated domain names (reverse DNS). As such, if the same DNS query is received from either the same or a different client or DNS server 102, the answer generation module 112 regenerates the same dynamically-generated IP address or domain name each time. It is this dynamic generation, even where an answer was previously generated, rather than storage of answers, that frees up memory and storage resources and distinguishes the present disclosure from systems and methods in the art.

The client or DNS server 102, the DNS answer augmentation system 104, and the authoritative DNS server 106 can communicate via any of a variety of means such as networks (e.g., the Internet, cellular-based data networks, or a LAN, to name a few examples). In some cases, the DNS answer augmentation system 104 can be in communication with a plurality of authoritative DNS servers and/or a plurality of clients or servers.

The answer generation module 112 and the parsing module 110 can be implemented as software modules, software functions, firmware modules, hardware components, one or more standalone servers, or hybrid software-hardware components, to name a few non-limiting examples.

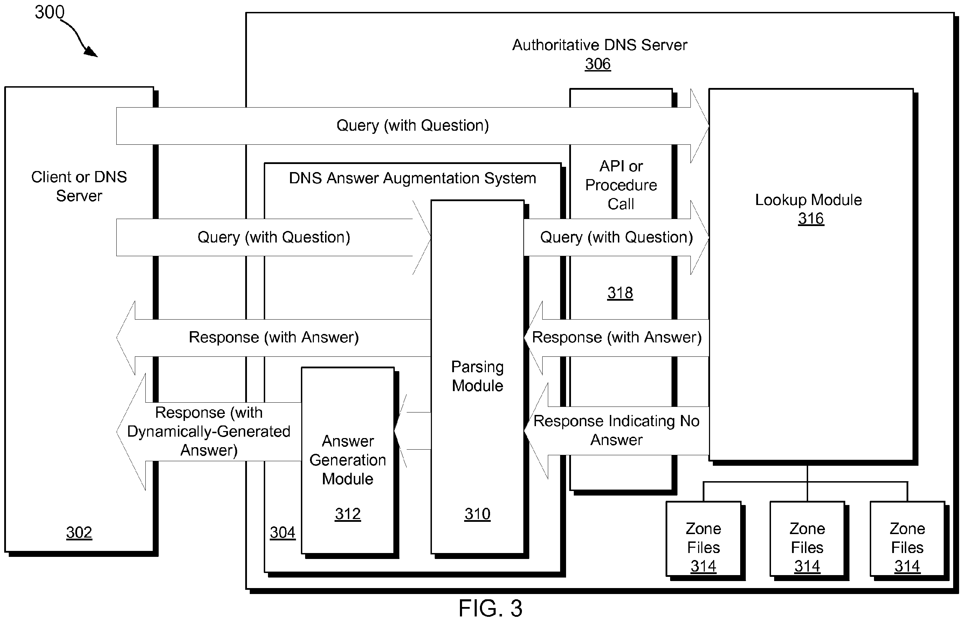

The DNS answer augmentation system 104 can be part of a standalone server, for instance, as a component or set of functionalities operating within a standalone server. Alternatively, the DNS answer augmentation system 104 can be part of the authoritative DNS server, for instance as a software module (see, e.g., FIG. 3) or hardware-software module. In such an embodiment, the DNS answer augmentation system 104 could pass DNS queries to the authoritative DNS server 106 via an API or procedure call. The DNS answer augmentation system 104 can operate as a DNS proxy where each DNS query and answer is received and transmitted. The DNS answer augmentation system 104 can also operate as a network packet filter where DNS packets are read off a network, filtered, passed, generated, or substituted.

It should be understood that FIG. 1 is a simplified diagram meant for illustrative purposes only. As such various modifications are envisioned that still fall within the scope of the disclosure. For instance, while only a single DNS answer augmentation system 104 and a single authoritative DNS server 106 are illustrated, the DNS answer augmentation system 104 can also augment answers from one or more authoritative DNS servers to queries from one or more clients or servers.

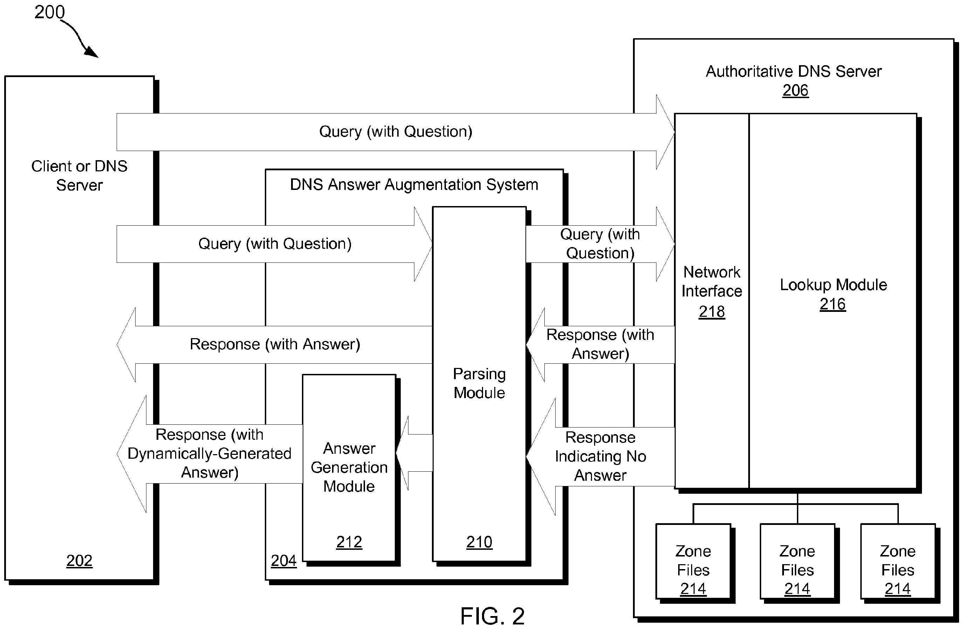

FIG. 2 illustrates one embodiment of a system 200 including a client or DNS server 202 and a DNS answer augmentation system 204 communicating with an authoritative DNS server 206 via a network interface 218 of the authoritative DNS server 206. The client or DNS server 202 sends a DNS query to the authoritative DNS server 206 that may or may not be intercepted by the DNS answer augmentation system 204 depending on the configuration of the answer augmentation system 204. If the DNS query is intercepted by the DNS answer augmentation system 204, then the answer augmentation system 204 has the opportunity to parse the DNS query via a parsing module 210 and pass a question from the DNS query to an answer generation module 212. Either way, an authoritative DNS server 206 receives the DNS query via a network interface 218, determines if an answer to the query exists in one of one or more zone files 214, and returns a response, via the network interface 218, where the response includes either an answer or an indication that the authoritative DNS server 206 does not have an answer.

The response can be intercepted by the DNS answer augmentation system 204, and the parsing module 210 of the DNS answer augmentation system 204 can determine whether the authoritative DNS server 206 had an answer to the question. In one embodiment, this is done by parsing the response for the answer. If the authoritative DNS server 206 did have the answer, then the response and its answer can be returned to the client or DNS server 202. If the parsing module 210 determines that the authoritative DNS server 206 did not have the answer to the question in the DNS query, then the parsing module 210 can instruct the answer generation module 212 to dynamically generate an answer. The answer generation module 212 can generate a dynamically-generated answer based on the question as parsed from the DNS query or as parsed from the DNS response. The dynamicallygenerated answer is then passed back to the client or DNS server 202 as part of the DNS response.

The authoritative DNS server 206 can include a lookup module 216 that receives the DNS query via the network interface 218. The lookup module 216 can search a zone file 214 associated with the DNS query for an answer to the question in the DNS query. If one is found, then the answer is returned in a DNS response and intercepted by the DNS answer augmentation system 204 and in particular by the parsing module 210. The parsing module 210 determines if the authoritative DNS server 206 has the answer to the DNS query and returns the answer to the client or DNS server 202 if the DNS response includes the answer.

If the lookup module 216 cannot find an answer, then it returns a no answer indication, which is intercepted by the DNS answer augmentation system 204 and passed to the parsing module 210. In one case, the no answer indication is an absence of an answer in the DNS response. The parsing module 210 determines that the authoritative DNS server 206 could not find an answer and thus instructs the answer generation module 212 to generate a dynamically-generated answer.

FIG. 3 illustrates one embodiment of a system 300 including a client or DNS server 302 and an authoritative DNS server 306 including a DNS answer augmentation system 304. The client or DNS server 302 sends a DNS query to the authoritative DNS server 306, and the DNS answer augmentation system 304 receives the DNS query. In one embodiment, a parsing module 310 of the DNS answer augmentation system 304 receives the DNS query and parses the DNS query and passes a question of the DNS query to an answer generation module 312 of the DNS answer augmentation system 304. The parsing module 310 also passes the DNS query to a lookup module 316 of the authoritative DNS server 306 via an API or procedure call 318. In embodiments where the DNS query does not pass to the DNS answer augmentation system 304, the DNS query passes straight to the lookup module 316 via an API or procedure call 318.

Regardless as to whether the DNS query passes though the parsing module 310 or not, the lookup module 316 searches a zone file 314 associated with the DNS query for an answer to the DNS query. If one is found, then the answer is returned to the client or DNS server 302 via the DNS answer augmentation system 304, and in particular, through the parsing module 310, which determines that the authoritative DNS server 306 has the answer to the question in the DNS query and thus returns the answer to the client or DNS server 302. The answer passes from the lookup module 316 to the parsing module 310 via the API or procedure call 318.

If the lookup module 316 cannot find an answer, then it returns a no answer indication, via the API or a procedure call 318. The no answer indication is intercepted by the DNS answer augmentation system 304, and in particular is intercepted by the parsing module 310. The parsing module 310 determines that the authoritative DNS server 306 could not find an answer and then instructs the answer generation module 312 to generate a dynamically-generated answer. The answer generation module 312 generates a dynamically-generated answer based in part on the question in the DNS query, whether parsed from the question or the response. The answer generation module 312 then returns the dynamically-generated answer to the client or DNS server 302.

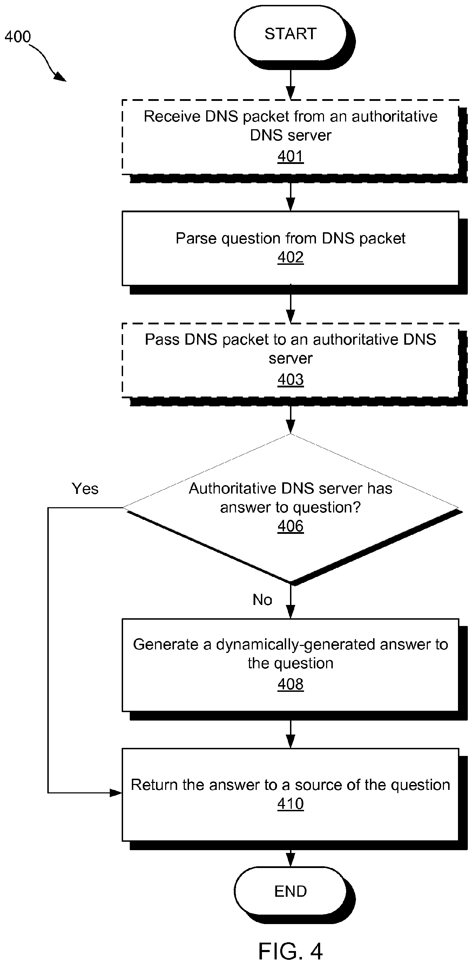

FIG. 4 illustrates a method for dynamically-generating an answer to a DNS query when an authoritative DNS server does not have an answer to the DNS query. The method 400 begins with an answer augmentation system (e.g., 104, 204, 304) parsing a question from a DNS packet in parse operation 402. The DNS packet can include either a DNS query or a DNS response. In the case of the DNS packet including a DNS query, the parse operation 402 can be followed by an optional pass the DNS packet to an authoritative DNS server operation 403. Where the DNS packet includes a DNS response, the parse operation 402 can be preceded by an optional receive DNS packet from an authoritative DNS server operation 401.

A decision 406 then determines whether the authoritative DNS server has an answer to the question. If it does, then the answer can be returned to a source of the question in the DNS query (e.g., a client or DNS server) in a return operation 410. If the authoritative DNS server does not have the answer, then a generate operation 408 can generate a dynamically-generated answer to the DNS query. An answer generation module (e.g., the answer generation modules 112, 212, and 312 of FIGs. 13) can perform the generate operation 408 and in some embodiments, can be part of a DNS answer augmentation system. Once generated, the dynamically-generated answer can be returned to the source of the question in the return operation 410.

In some embodiments, the question can be part of a DNS packet that is a DNS query to the authoritative DNS server. In such embodiments, the DNS packet can be passed to the authoritative DNS server in parallel to or after the parse question operation 402. Alternatively, there are situations where the DNS packet is not passed to the authoritative DNS server since the DNS answer augmentation system is already aware that the authoritative DNS server does not have an answer to the question or because an IP address or domain name in the question is on a list associated with instructions to generate a dynamically-generated answer in all situations where a query of the listed IP addresses or domain names is received. For instance, an ISP may desire that reverse DNS queries for IP addresses of devices belonging to information technology staff always receive dynamically-generated answers, and thus in such cases, there is no need for the DNS query to be passed to the authoritative DNS server. In other embodiments of the present invention, the DNS answer augmentation system will be configured to not pass the DNS query during certain periods of the day, for instance where an authoritative DNS server load is high. Thus, the pass DNS packet operation 403 is optional.

Further embodiments can include the question being parsed from a DNS packet that includes a DNS response coming from the authoritative DNS server. In such embodiments, the DNS packet can be received from the authoritative DNS server before the parse question operation 402. Alternatively, there are situations where the DNS packet is not received from the authoritative DNS server since a DNS query was never passed to the authoritative DNS server for one of the reasons explained in the preceding paragraph. In other cases, the authoritative DNS server may be down, and as such the DNS answer augmentation system may be configured to dynamically generate answers if a DNS query is made, but no response is intercepted for a given period of time. Thus, the receive DNS packet operation 401 is optional.

In some instances, the answer augmentation system can be a part of an authoritative DNS server (e.g., 306 in FIG. 3), and therefore the DNS packet need not be received from or passed to the authoritative DNS server. This is another reason that the receive and pass operations 401 and 403 are optional.

In some embodiments, the decision 406 can be carried out before the parse question from DNS packet operation 402. For instance, where the question is parsed from the DNS response, the decision 406 may determine that the authoritative DNS server does not have an answer before the DNS response is parsed. In another example, the DNS answer augmentation system may intercept a DNS query and compare the question to a list of IP address or domain names associated with instructions to generate dynamically-generated answers where such IP addresses or domain names are found in a DNS query. If the question is found in the list, then this may indicate that the authoritative DNS server does not have an answer and therefore the question can be parsed from the DNS query after the decision 406 has been made.

Even after a first time that a dynamically-generate answer to a DNS query is generated, further requests for the same DNS query will result in the dynamicallygenerated answer being generated again and again. In other words, the dynamicallygenerated answers are not stored and the zone files of the authoritative DNS server are typically not modified by the answer augmentation system. Instead, the answer augmentation system dynamically-generates answers every time that a DNS query is made, even if the same DNS query was previously made. It is this dynamic, or onthe-fly, generation of answers as compared to an updating and turning to zone files that enables DNS mappings for IPv6 IP addresses without unmanageably-large zone files.

One of skill in the art will recognize that the authoritative DNS server herein disclosed is also able to map domain names to name server (NS) records and mail exchanger (MX) records, in addition to mapping domain names to IP address records. Therefore, all systems and methods dealing with domain name to IP address mappings and dynamic generation of either are equally applicable to mappings of domain names to NS records and/or to MX records as well as dynamic generation of either.

The "DNS queries" referred to relative to FIGs. 1-4 can be forward or reverse DNS queries, and therefore can include a domain name or an IP address, respectively. Similarly, the "answers' referred to relative to FIGS. 1-4 can include IP addresses and domain names provided by an authoritative DNS server or dynamically-generated IP address or dynamically-generated domain names.

While the authoritative DNS servers 106, 206, 306, and those referred to in the method FIG. 4 have been described as authoritative, in some embodiments, they can be non-authoritative. In such embodiments, the source of a query can be a client or another name server (e.g., another DNS server).

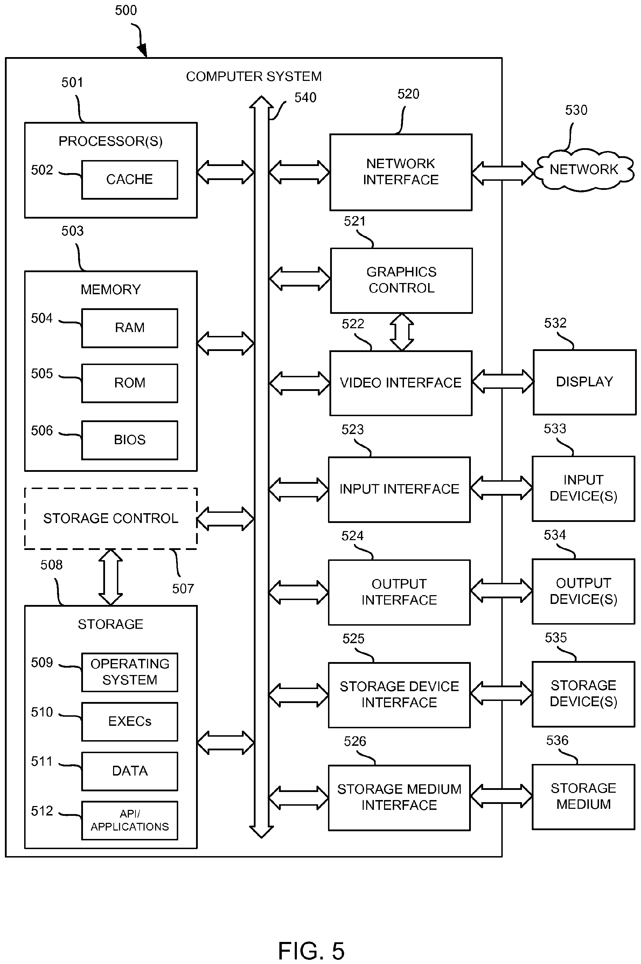

The systems and methods described herein can be implemented in a machine such as a computer system in addition to the specific physical devices described herein. FIG. 5 shows a diagrammatic representation of one embodiment of a machine in the exemplary form of a computer system 500 within which a set of instructions can execute for causing a device to perform or execute any one or more of the aspects and/or methodologies of the present disclosure. The components in FIG. 5 are examples only and do not limit the scope of use or functionality of any hardware, software, embedded logic component, or a combination of two or more such components implementing particular embodiments.

Computer system 500 may include a processor 501, a memory 503, and a storage 508 that communicate with each other, and with other components, via a bus 540. The bus 540 may also link a display 532, one or more input devices 533 (which may, for example, include a keypad, a keyboard, a mouse, a stylus, etc.), one or more output devices 534, one or more storage devices 535, and various tangible storage media 536. All of these elements may interface directly or via one or more interfaces or adaptors to the bus 540. For instance, the various tangible storage media 536 can interface with the bus 540 via storage medium interface 526. Computer system 500 may have any suitable physical form, including but not limited to one or more integrated circuits (ICs), printed circuit boards (PCBs), mobile handheld devices (such as mobile telephones or PDAs), laptop or notebook computers, distributed computer systems, computing grids, or servers.

Processor(s) 501 (or central processing unit(s) (CPU(s))) optionally contains a cache memory unit 502 for temporary local storage of instructions, data, or computer addresses. Processor(s) 501 are configured to assist in execution of computer readable instructions. Computer system 500 may provide functionality as a result of the processor(s) 501 executing software embodied in one or more tangible computerreadable storage media, such as memory 503, storage 508, storage devices 535, and/or storage medium 536. The computer-readable media may store software that implements particular embodiments, and processor(s) 501 may execute the software. Memory 503 may read the software from one or more other computer-readable media (such as mass storage device(s) 535, 536) or from one or more other sources through a suitable interface, such as network interface 520. The software may cause processor(s) 501 to carry out one or more processes or one or more steps of one or more processes described or illustrated herein. Carrying out such processes or steps may include defining data structures stored in memory 503 and modifying the data structures as directed by the software.

The memory 503 may include various components (e.g., machine readable media) including, but not limited to, a random access memory component (e.g., RAM 504) (e.g., a static RAM "SRAM", a dynamic RAM "DRAM, etc.), a read-only component (e.g., ROM 505), and any combinations thereof. ROM 505 may act to communicate data and instructions unidirectionally to processor(s) 501, and RAM 504 may act to communicate data and instructions bidirectionally with processor(s) 501. ROM 505 and RAM 504 may include any suitable tangible computer-readable media described below. In one example, a basic input/output system 506 (BIOS), including basic routines that help to transfer information between elements within computer system 500, such as during start-up, may be stored in the memory 503.

Fixed storage 508 is connected bidirectionally to processor(s) 501, optionally through storage control unit 507. Fixed storage 508 provides additional data storage capacity and may also include any suitable tangible computer-readable media described herein. Storage 508 may be used to store operating system 509, EXECs 510 (executables), data 511, API applications 512 (application programs), and the like. Often, although not always, storage 508 is a secondary storage medium (such as a hard disk) that is slower than primary storage (e.g., memory 503). Storage 508 can also include an optical disk drive, a solid-state memory device (e.g., flash-based systems), or a combination of any of the above. Information in storage 508 may, in appropriate cases, be incorporated as virtual memory in memory 503.

In one example, storage device(s) 535 may be removably interfaced with computer system 500 (e.g., via an external port connector (not shown)) via a storage device interface 525. Particularly, storage device(s) 535 and an associated machinereadable medium may provide nonvolatile and/or volatile storage of machine-readable instructions, data structures, program modules, and/or other data for the computer system 500. In one example, software may reside, completely or partially, within a machine-readable medium on storage device(s) 535. In another example, software may reside, completely or partially, within processor(s) 501.

Bus 540 connects a wide variety of subsystems. Herein, reference to a bus may encompass one or more digital signal lines serving a common function, where appropriate. Bus 540 may be any of several types of bus structures including, but not limited to, a memory bus, a memory controller, a peripheral bus, a local bus, and any combinations thereof, using any of a variety of bus architectures. As an example and not by way of limitation, such architectures include an Industry Standard Architecture (ISA) bus, an Enhanced ISA (EISA) bus, a Micro Channel Architecture (MCA) bus, a Video Electronics Standards Association local bus (VLB), a Peripheral Component Interconnect (PCI) bus, a PCI-Express (PCI-X) bus, an Accelerated Graphics Port (AGP) bus, HyperTransport (HTX) bus, serial advanced technology attachment (SATA) bus, and any combinations thereof.

Computer system 500 may also include an input device 533. In one example, a user of computer system 500 may enter commands and/or other information into computer system 500 via input device(s) 533. Examples of an input device(s) 533 include, but are not limited to, an alpha-numeric input device (e.g., a keyboard), a pointing device (e.g., a mouse or touchpad), a touchpad, a joystick, a gamepad, an audio input device (e.g., a microphone, a voice response system, etc.), an optical scanner, a video or still image capture device (e.g., a camera), and any combinations thereof. Input device(s) 533 may be interfaced to bus 540 via any of a variety of input interfaces 523 (e.g., input interface 523) including, but not limited to, serial, parallel, game port, USB, FIREWIRE, THUNDERBOLT, or any combination of the above.

In particular embodiments, when computer system 500 is connected to network 530, computer system 500 may communicate with other devices, specifically mobile devices and enterprise systems, connected to network 530. Communications to and from computer system 500 may be sent through network interface 520. For example, network interface 520 may receive incoming communications (such as requests or responses from other devices) in the form of one or more packets (such as Internet Protocol (IP) packets) from network 530, and computer system 500 may store the incoming communications in memory 503 for processing. Computer system 500 may similarly store outgoing communications (such as requests or responses to other devices) in the form of one or more packets in memory 503 and communicated to network 530 from network interface 520. Processor(s) 501 may access these communication packets stored in memory 503 for processing.

Examples of the network interface 520 include, but are not limited to, a network interface card, a modem, and any combination thereof. Examples of a network 530 or network segment 530 include, but are not limited to, a wide area network (WAN) (e.g., the Internet, an enterprise network), a local area network (LAN) (e.g., a network associated with an office, a building, a campus or other relatively small geographic space), a telephone network, a direct connection between two computing devices, and any combinations thereof. A network, such as network 530, may employ a wired and/or a wireless mode of communication. In general, any network topology may be used.

Information and data can be displayed through a display 532. Examples of a display 532 include, but are not limited to, a liquid crystal display (LCD), an organic liquid crystal display (OLED), a cathode ray tube (CRT), a plasma display, and any combinations thereof. The display 532 can interface to the processor(s) 501, memory 503, and fixed storage 508, as well as other devices, such as input device(s) 533, via the bus 540. The display 532 is linked to the bus 540 via a video interface 522, and transport of data between the display 532 and the bus 540 can be controlled via the graphics control 521.

In addition to a display 532, computer system 500 may include one or more other peripheral output devices 534 including, but not limited to, an audio speaker, a printer, and any combinations thereof. Such peripheral output devices may be connected to the bus 540 via an output interface 524. Examples of an output interface 524 include, but are not limited to, a serial port, a parallel connection, a USB port, a FIREWIRE port, a THUNDERBOLT port, and any combinations thereof.

In addition or as an alternative, computer system 500 may provide functionality as a result of logic hardwired or otherwise embodied in a circuit, which may operate in place of or together with software to execute one or more processes or one or more steps of one or more processes described or illustrated herein. Reference to software in this disclosure may encompass logic, and reference to logic may encompass software. Moreover, reference to a computer-readable medium may encompass a circuit (such as an IC) storing software for execution, a circuit embodying logic for execution, or both, where appropriate. The present disclosure encompasses any suitable combination of hardware, software, or both.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the claims.

## Claims

1. A method of operating a DNS answer augmentation system (104, 204, 304) comprising:
parsing (110, 210, 310; 402) a question from a DNS packet;
generating a dynamically-generated answer (112, 212, 312) to the question (402), and returning the dynamically-generated answer to a source of the question;
wherein the question comprises any of a reverse DNS lookup and a forward DNS lookup (116, 216, 316), and generating the dynamically-generated answer comprises, for the case of the reverse DNS lookup, using at least a portion of an IP address in the question to generate a domain name that includes a domain for which an authoritative DNS server is authoritative, and for the case of the forward DNS lookup, using at least a portion of a domain name in the question to generate an IP address, the method **characterized in that** during a period of time in which load on the authoritative DNS server (106, 206, 306) is high, not passing the DNS packet to the authoritative DNS server, wherein the DNS packet is passed to the authoritative DNS server at other periods of time, the generation of the dynamic generated-answer being in response to not passing the DNS packet.

2. The method of Claim 1, wherein the DNS answer generation module generates the dynamically-generated answer in response to an IPv6 DNS lookup and/or in response to an IPv4 DNS lookup.

3. The method of Claim 2, wherein a domain of the dynamically-generated answer is the same for two or more different reverse DNS lookups.

4. The method of Claim 1, wherein the DNS answer generation module returns the dynamically-generated answer to a client and/or to a DNS server.

5. The method of Claim 1, wherein the DNS packet is intercepted by the DNS answer augmentation system en route to the authoritative DNS server from a client or DNS server.

6. The method of Claim 1, wherein the dynamically-generated answer is generated without modification to one or more zone files of the authoritative DNS server.

7. The method of Claim 1, where the question comprises the reverse DNS lookup, and at least a portion of the IP address appears in the domain name.

8. The method of Claim 1, wherein the question comprises the forward DNS lookup.

9. A computer system within which a set of instructions when executing cause the computer system to:
provide an answer augmentation system (104, 204, 304) that provides:
parsing (110,210,310,402) a question from a DNS packet;
generating a dynamically-generated answer (112, 212, 312) to the question (402); and
returning the dynamically-generated answer to a source of the question;
wherein the question comprises any of a reverse DNS lookup and a forward DNS lookup (116, 216, 316), and generating the dynamically-generated answer comprises, for the case of the reverse DNS lookup, using at least a portion of an IP address in the question to generate a domain name that includes a domain for which an authoritative DNS server is authoritative, and for the case of the forward DNS lookup, using at least a portion of a domain name in the question to generate an IP address, the system **characterized in that** during a period of time in which load on a lookup module (116, 216, 316) of the authoritative DNS server (106, 206, 306) is high, not passing the DNS packet to the lookup module, wherein the DNS packet is passed to the lookup module at other periods of time, the generation of the dynamic generated-answer being in response to not passing the DNS packet.

## Patentansprüche

1. Ein Verfahren zum Betrieb eines DNS-Antworterweiterungssystems (104, 204, 304), umfassend:
Parsen (110, 210, 310; 402) einer Frage aus einem DNS-Paket;
Generieren einer dynamisch generierten Antwort (112, 212, 312) auf die Frage (402) und Rücksenden der dynamisch generierten Antwort an eine Quelle der Frage;
wobei die Frage ein Reverse DNS Lookup und ein Forward DNS Lookup (116, 216, 316) umfasst, und das Generieren der dynamisch generierten Antwort umfasst, im Fall des Reverse DNS Lookup, das Nutzen mindestens eines Teils einer IP-Adresse in der Frage, um einen Domain-Namen zu generieren, der eine Domain einschließt, für die ein autoritativer DNS-Server maßgeblich ist, und im Fall des Forward DNS Lookup, das Nutzen mindestens eines Teils eines Domain-Namens in der Frage, um eine IP-Adresse zu generieren, das Verfahren **gekennzeichnet dadurch, dass** während eines Zeitraums, in dem die Belastung des autoritativen DNS-Servers (106, 206, 306) hoch ist, das DNS-Paket nicht an den autoritativen DNS-Server weitergeleitet wird, wobei das DNS-Paket zu anderen Zeitpunkten an den autoritativen DNS-Server weitergeleitet wird, die Generierung der dynamisch generierten Antwort ist die Antwort darauf, dass das DNS-Paket nicht weitergeleitet wurde.

2. Das Verfahren nach Anspruch 1, wobei das DNS-Antwortgenerierungsmodul die dynamisch generierte Antwort in Beantwortung eines IPv6 DNS Lookup und/oder in Beantwortung eines IPv4 DNS Lookup generiert.

3. Das Verfahren nach Anspruch 2, wobei eine Domain der dynamisch generierten Antwort für zwei oder mehr verschiedene Reverse DNS Lookups gleich ist.

4. Das Verfahren nach Anspruch 1, wobei das DNS-Antwortgenerierungsmodul die dynamisch generierte Antwort an einen Client und/oder DNS-Server zurückgibt.

5. Das Verfahren nach Anspruch 1, wobei das DNS-Paket durch das DNS-Antworterweiterungssystem auf der Strecke zum autoritativen DNS-Server von einem Client oder DNS-Server abgefangen wird.

6. Das Verfahren nach Anspruch 1, wobei die dynamisch generierte Antwort ohne Modifikation einer oder mehrerer Zonendateien des autoritativen DNS Servers generiert wird.

7. Das Verfahren nach Anspruch 1, wobei die Frage das Reverse DNS Lookup umfasst und mindestens ein Teil der IP-Adresse in dem Domain-Namen erscheint.

8. Das Verfahren nach Anspruch 1, wobei die Frage das Forward DNS Lookup umfasst.

9. Ein Computersystem, in dem ein Satz von Anweisungen bei Ausführung das Computersystem zu Folgendem veranlasst:
Bereitstellen eines Antworterweiterungssystems (104, 204, 304), das Folgendes bietet:
Parsen (110, 210, 310, 402) einer Frage aus einem DNS-Paket;
Generieren einer dynamisch generierten Antwort (112, 212, 312) auf die Frage (402) und Rücksenden der dynamisch generierten Antwort an eine Quelle der Frage;
wobei die Frage entweder ein Reverse DNS Lookup oder ein Forward DNS Lookup (116, 216, 316) umfasst, und das Generieren der dynamisch generierten Antwort umfasst, im Fall des Reverse DNS Lookup, das Nutzen mindestens eines Teils einer IP-Adresse in der Frage, um einen Domain-Namen zu generieren, der eine Domain einschließt, für die ein autoritativer DNS-Server maßgeblich ist, und im Fall des Forward DNS Lookup, das Nutzen mindestens eines Teils eines Domain-Namens in der Frage, um eine IP-Adresse zu generieren, das Verfahren **gekennzeichnet dadurch, dass** während eines Zeitraums, in dem die Belastung des autoritativen DNS-Servers (106, 206, 306) hoch ist, das DNS-Paket nicht an das Lookup-Modul weitergeleitet wird, wobei das DNS-Paket zu anderen Zeitpunkten an das Lookup-Modul weitergeleitet wird, die Generierung der dynamisch generierten Antwort ist die Antwort darauf, dass das DNS-Paket nicht weitergeleitet wurde.

## Revendications

1. Procédé d'utilisation d'un système d'augmentation de réponse DNS (104, 204, 304) comprenant :
l'analyse (110, 210, 310 ; 402) d'une question provenant d'un paquet DNS ;
la génération d'une réponse générée de manière dynamique (112, 212, 312) à la question (402) et le renvoi de la réponse générée de manière dynamique à une source de la question ;
dans lequel la question comprend l'une quelconque parmi une recherche DNS inverse et une recherche DNS directe (116, 216, 316) et la génération de la réponse générée de manière dynamique comprend, pour le cas de la recherche DNS inverse, l'utilisation d'au moins une partie d'une adresse IP dans la question pour générer un nom de domaine qui comporte un domaine pour lequel un serveur DNS faisant autorité fait autorité et dans le cas de la recherche DNS directe, l'utilisation d'au moins une partie d'un nom de domaine dans la question pour générer une adresse IP, le procédé **caractérisé en ce que** pendant une période de temps dans laquelle la charge sur le serveur DNS faisant autorité (106, 206, 306) est élevée, ne transmettant pas le paquet DNS au serveur DNS faisant autorité, dans lequel le paquet DNS est transmis au serveur DNS faisant autorité à d'autres périodes de temps, la génération de la réponse générée de manière dynamique étant en réponse à ne pas transmettre le paquet DNS.

2. Procédé selon la revendication 1, dans lequel le module de génération de réponse DNS génère la réponse générée de manière dynamique en réponse à une recherche DNS IPv6 et/ou en réponse à une recherche DNS IPv4.

3. Procédé selon la revendication 2, dans lequel un domaine de la réponse générée de manière dynamique est le même pour deux ou plusieurs recherches DNS inverses différentes.

4. Procédé selon la revendication 1, dans lequel le module de génération de réponse DNS renvoie la réponse générée de manière dynamique à un client et/ou à un serveur DNS.

5. Procédé selon la revendication 1, dans lequel le paquet DNS est intercepté par le système d'augmentation de réponse DNS en route vers le serveur DNS faisant autorité à partir d'un client ou d'un serveur DNS.

6. Procédé selon la revendication 1, dans lequel la réponse générée de manière dynamique est générée sans modification d'un ou plusieurs fichiers de zone du serveur DNS faisant autorité.

7. Procédé selon la revendication 1, dans lequel la question comprend la recherche DNS inverse et au moins une partie de l'adresse IP apparaît dans le nom de domaine.

8. Procédé selon la revendication 1, dans lequel la question comprend la recherche DNS directe.

9. Système informatique à l'intérieur duquel un ensemble d'instructions lors de l'exécution amène le système informatique :
à fournir un système d'augmentation de réponse (104, 204, 304) qui fournit :
à analyser (110, 210, 310, 402) une question provenant d'un paquet DNS ;
à générer une réponse générée dynamiquement (112, 212, 312) à la question (402) ; et à renvoyer la réponse générée de manière dynamique à une source de la question ;
dans lequel la question comprend l'une quelconque parmi une recherche DNS inverse et une recherche DNS directe (116, 216, 316) et la génération de la réponse générée de manière dynamique comprend, pour le cas de la recherche DNS inverse, l'utilisation d'au moins une partie d'une adresse IP dans la question pour générer un nom de domaine qui comporte un domaine pour lequel un serveur DNS faisant autorité fait autorité et dans le cas de la recherche DNS directe, l'utilisation d'au moins une partie d'un nom de domaine dans la question pour générer une adresse IP, le système **caractérisé en ce que** pendant une période de temps dans laquelle la charge sur le module de recherche (116, 216, 316) du serveur DNS faisant autorité (106, 206, 306) est élevée, ne transmettant pas le paquet DNS au module de recherche, dans lequel le paquet DNS est transmis au module de recherche à d'autres périodes de temps, la génération de la réponse générée de manière dynamique étant en réponse à ne pas transmettre le paquet DNS.
